# EUROPÄISCHE PATENTSCHRIFT

(11) **EP 3 771 667 B1**
(45) Veröffentlichungstag und Bekanntmachung des Hinweises auf die Patenterteilung: **18.09.2024**
(21) Anmeldenummer: 19188762.9
(22) Anmeldetag: 29.07.2019
(51) Int. Cl.: B65G 67/60, B66C 23/76, B66C 23/74

(54) **BELADEVORRICHTUNG UND PYLON FÜR EINE BELADEVORRICHTUNG**
LOADING DEVICE AND PYLON FOR A LOADING DEVICE
DISPOSITIF DE CHARGEMENT ET MÂT POUR DISPOSITIF DE CHARGEMENT

(43) Veröffentlichungstag der Anmeldung: 03.02.2021
(73) Patentinhaber: Bühler AG, 9240 Uzwil (CH)
(72) Erfinder: BRÜLLMANN, Adrian, 8588 Zihlschlacht (CH); KOSTIC, Bogoljub, 9240 Uzwil (CH)
(74) Vertreter: Vossius & Partner Patentanwälte Rechtsanwälte mbB

(56) Entgegenhaltungen:
- CN-A- 101 839 003
- DE-A1- 2 523 948
- DE-B- 1 290 875
- DE-U1- 9 017 114
- JP-A- H06 220 882

## Beschreibung

Die vorliegende Erfindung betrifft eine Beladevorrichtung sowie einen Pylon für eine Beladevorrichtung.

Beladevorrichtungen für Lasten, wie beispielsweise Stückgut oder Schüttgut, weisen in der Regel einen Pylon auf, an welchem Ausleger angebracht sein können, um den Verladeradius zu erhöhen oder Gegengewichte zu halten. Derartige Vorrichtungen finden z.B. bei mobilen oder statischen Schiffsbeladern, Stackern sowie Kränen Einsatz.

In herkömmlichen Systemen ist der Pylon in der Regel senkrecht ausgeführt. Die Ausleger zum Verladen von Lasten sowie für die Gegengewichte sind dabei etwa im 90-Grad Winkel am Pylon angebracht, wobei der Ausleger zum Verladen von Lasten oftmals vertikal verkippbar ist. Falls Schüttgüter verladen werden, muss der Pylon in Bezug auf die Drehachse leicht versetzt sein, um Platz für die Produktzufuhr und eine freie Rotation des Auslegers zu gewährleisten, da das Produkt in der Regel oberhalb der Drehachse vom Produkt zuführenden Band, welches statisch ist, an den Produkt abführenden Ausleger, welcher in der Regel gemeinsam mit dem Pylon drehbar gelagert ist, übergeben wird. In herkömmlichen Systemen sind Ausgleichs- oder Gegengewichte notwendig, die neben der Last des Auslegers und des hiermit verbundenen Equipments auch die durch den Versatz des Pylons bedingte Gewichtsverlagerung ausgleichen. Ferner ziehen Biegebelastungen große und aufwändige Strukturen nach sich, die in der Herstellung teuer und möglicherweise anfällig gegenüber Wind und Erdbeben sind. Durch zunehmende Beladeleistungen werden die Vorrichtungen in Zukunft immer größer, wodurch größere Kräfte an der Tragwerksstruktur, insbesondere an Kraftübergängen, auftreten.

EP 0 832 831 B1 zeigt einen Schiffsbelader mit einem Drehteil, das parallel zur Drehachse auf dem verfahrbaren Portal angeordnet ist. Der die Verbindung des Auslegers mit dem Drehteil des Portals bildende Drehpunkt bildet gleichzeitig die Hub- und Senkachse des Auslegers. Damit in der oberen Stellung des Auslegers eine Übergabe des Schüttguts zwischen den Förderbändern erfolgen kann, muss das Drehteil im oberen Drittel einen Knick aufweisen.

EP 0 000 550 B1 offenbart einen Schiffsentlader, bei dem das Stückgut senkrecht nach oben gefördert wird. Eine Säule ist auf einer drehbaren Plattform angeordnet. Eine Entladestation weist einen Wippausleger auf, der zur Säule drehbar gelagert ist, um eine Wippbewegung relativ dazu zu ermöglichen. Die Säule ist einmal geknickt, damit das Förderband und das Verbindungsförderband das Schüttgut auf ein zweites Zwischenförderband übergeben können. Ferner ist diese Abknickung notwendig um ein Parallelogramm von Säule, Schwenkarm, beweglichem Rahmen und Verbindungsstück relativ zur Austragseinheit zu ermöglichen.

Beide zitierten Dokumente weisen einen Knick im Pylon auf, der zu den oben beschriebenen ungünstigen und hohen Kräften auf die Tragwerksstruktur führt und ferner durch die Gewichtsverlagerung weit entfernt vom Drehpunkt eine Kompensation in Form von Gegengewichten notwendig macht.

Die DE 25 23 948 A1 offenbart eine Beladevorrichtung nach dem Oberbegriff des Anspruchs 1, wobei die Beladevorrichtung ein Gegengewicht aufweist und wobei der Pylon der Beladevorrichtung von einem Basispunkt ausgeht und zumindest teilweise geknickt ausgeführt ist, und wobei der Pylon derart geknickt ist, dass er eine Vertikalachse unter einem Winkel schneidet, wobei sich die Vertikalachse durch den Basispunkt in vertikaler Richtung erstreckt.

Somit ist die Aufgabe der vorliegenden Erfindung, eine Beladevorrichtung sowie einen Pylon für eine Beladevorrichtung bereitzustellen, der die Probleme des Stands der Technik löst. Die Erfindung wird in den unabhängigen Ansprüchen 1 und 14 definiert. Abhängige Ansprüche beschreiben bevorzugte Ausführungsformen.

Ein erster Aspekt der Erfindung bezieht sich auf eine Beladevorrichtung nach Anspruch 1, wobei die Beladevorrichtung ein Portal sowie ein Podest aufweist, das auf dem Portal angebracht ist. Ein Pylon ist an einem Basispunkt auf dem Podest angeordnet. Ein Ausleger, erstreckt sich ausgehend vom Pylon. Der Pylon ist mit dem Podest drehbar verbindbar. Das Podest definiert eine Vertikalachse, die sich in vertikaler Richtung erstreckt und durch den Basispunkt verläuft. Der Pylon ist zumindest in einem an das Podest angrenzenden Bereich gebogen und schneidet die Vertikalachse in einem Winkel a. Ferner können Produktzufuhreinrichtungen, insbesondere Förderbänder an der Beladevorrichtung vorgesehen sein.

Bevorzugt weist der Pylon eine Gabel, ein zentrales Mittelstück und Gegengewichte auf, wobei die Gabel durch zwei Beine und einen verbindenden Steg gebildet wird und die Gabel gebogen ist. Wobei bevorzugt die Beine der Gabel gebogen sind. Bevorzugt ist der Ausleger zwischen den zwei Beinen des Pylons angeordnet.

Der Ausleger kann in der Höhe verstellbar sein. Der Winkel a kann zwischen 20° und 60°, bevorzugt 30° und 50°, und besonders bevorzugt 40° bis 45° betragen.

Der Schwerpunkt des Pylons liegt bevorzugt im Wesentlichen über dem Basispunkt oder vom Basispunkt in einer zum Ausleger entgegengesetzten Richtung versetzt. Diese Richtung wird auch als "hinten" bezeichnet.

Der Pylon ist erfindungsgemäß in einer Richtung gebogen. Das Podest kann um die Vertikalachse drehbar sein. Der vom Basispunkt entfernte Abschnitt des Pylons kann gerade ausgebildet sein. An dem vom Basispunkt entfernten Abschnitt des Pylons ist mindestens ein Gegengewicht angebracht. Der Pylon ist bevorzugt aus einer kastenförmigen Stahlkonstruktion ausgebildet, beispielsweise aus geschweißten Stahlblechen.

Die Beladevorrichtung kann ein mobiler oder stationärer Ent- oder Belader für Schiffe oder ein Kran sein.

Ferner wird durch einen zweiten Aspekt der Erfindung ein Pylon für eine Beladevorrichtung nach Anspruch 14 bereitgestellt. Der Pylon geht von einem Basispunkt aus und ist zumindest teilweise gebogen ausgeführt. Ferner ist der Pylon derart gebogen, dass er eine Vertikalachse unter einem Winkel a schneidet. Die Vertikalachse erstreckt sich durch den Basispunkt in vertikaler Richtung.

Die oben in Zusammenhang mit der Beladevorrichtung beschriebenen Vorteile und bevorzugten Ausführungsformen beziehen sich ebenso auf den Pylon selbst.

Im Betrieb liegt der Schwerpunkt des Pylons bevorzugt im Wesentlichen über oder hinter dem Basispunkt, also in der von dem Ausleger bzw. Schiff abgewandten Seite des Portals. Der erfindungsgemäße Pylon kann über seine Längsausdehnung zu mindestens 10 %, 20 %, 25 % oder 50 % gebogen ausgebildet sein. Bevorzugt ist der dem Podest zugewandte Abschnitt des Pylons gebogen bzw. gekrümmt ausgeführt. Der Pylon ist also ausgehend vom Basispunkt gebogen ausgeführt. Insbesondere kann der vom Basispunkt entfernte Abschnitt geradlinig ohne Krümmung ausgebildet sein. Der Pylon kann auch vollständig gebogen bzw. gekrümmt ausgeführt sein. Der Pylon ist vorzugsweise nur in einer Richtung gebogen.

Der Pylon kann auf einem um eine Drehachse drehbaren Podest angebracht sein, wobei die Vertikalachse mit der Drehachse zusammen fallen kann. Somit liegt hierbei der Basispunkt im Wesentlichen auf der Drehachse. An dem Pylon kann ferner ein Ausleger angebracht sein. Der Pylon ist in einer bevorzugten Ausführung gabelförmig ausgebildet, so dass zwei Beine mit dem Podest verbunden sind und diese zwei Beine gemeinsam mit einem verbindenden Steg eine Gabel bilden, die mit einem Mittelstück verbunden ist. Hierbei kann der Ausleger zwischen den zwei Beinen angebracht sein. Der Ausleger kann in der Höhe verstellbar sein. Insbesondere kann der Ausleger um einen Aufhänge- bzw. Drehpunkt am Pylon vertikal verkippbar sein.

Wie oben beschrieben kann der Pylon insbesondere in einem mobilen oder stationären Belader oder Entlader für Schiffe oder bei einem Kran verwendet werden.

Die Erfindung wird anhand der beigefügten Zeichnungen näher erläutert. Es zeigen
Fig. 1A: Einen Pylon gemäß dem Stand der Technik
Fig. 1 B: Einen erfindungsgemäßen Pylon
Fig. 2: Eine Seitenansicht einer Vorrichtung zum Verladen von Lasten mit dem erfindungsgemäßen Pylon
Fig. 3: Eine perspektivische Ansicht einer Vorrichtung zum Verladen von Lasten mit dem erfindungsgemäßen Pylon.

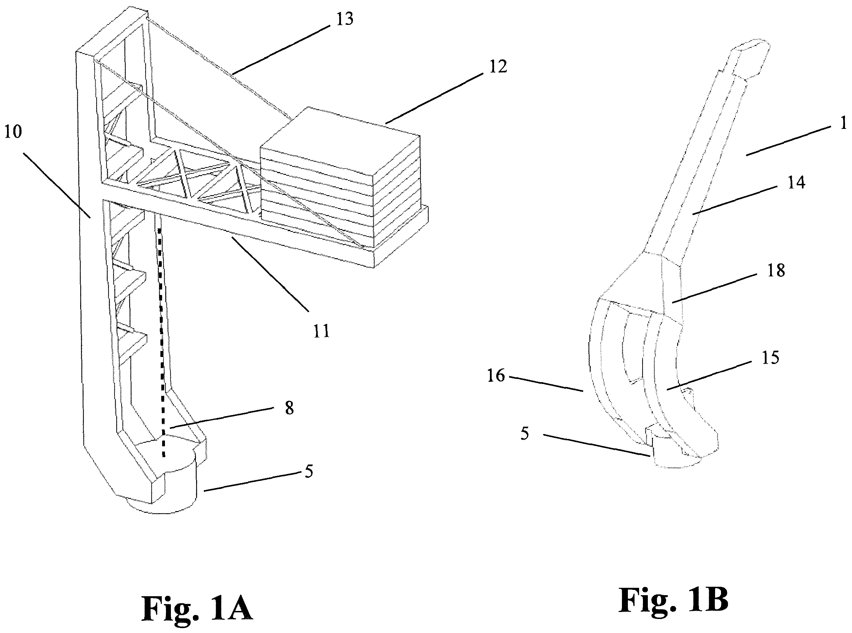

Figur 1A zeigt einen herkömmlichen Schiffsbelader mit einem Vertikalträger 10, der auf einem Podest drehbar gelagert werden kann und an welchem ein Horizontalträger 11 angebracht ist, um Gegengewichte 12 daran aufzunehmen. Durch das Podest 5 führt die Vertikalachse 8. Um, wenn beispielsweise Schüttgut verladen wird, eine Drehbewegung des Vertikalträgers zu ermöglichen, ist an diesem am unteren Ende ein Knick ausgebildet, so dass der Vertikalträger 10 mit Bezug auf seine Drehachse nach vorne versetzt ist. Vorne bezeichnet die Richtung, in welche das Schüttgut bzw. die Lasten verladen werden, während hinten die Richtung des Horizontalträgers bzw. der Zufuhr von Schüttgut bezeichnet. Dieser Versatz ist notwendig, da das zu verladende Schüttgut üblicherweise oberhalb der Drehachse 8 des Podests 5 von einem zuführenden Transportband auf den abführenden Ausleger übergeben wird und es ohne diesen Versatz bei einer Drehbewegung des Vertikalträgers zur Kollision mit dem zuführenden Transportband kommen könnte. Dabei ist der Vertikalträger 10 in einem unteren Abschnitt nach vorne, d.h. abweichend von der Vertikalachse 8, ausgerichtet und geht dann über einen Knick in einen ungekrümmten vertikalen Abschnitt über. Somit sind Gegengewichte 12 notwendig, die am hinteren Ende des Horizontalträgers angebracht werden, um das durch den Versatz nach vorne auftretende Ungleichgewicht sowie das Gewicht des Auslegers mit Lasten (nicht gezeigt) zu kompensieren. Mit anderen Worten kompensieren die Gegengewichte Ungleichgewichte, die insbesondere durch die Vorrichtungen, die oberhalb der Bodenplatte bzw. dem Podest des Vertikalträgers 10 angeordnet sind, sowie durch das Schüttgut entstehen.

Ferner ist eine schräge Abspannung 13 vom Vertikalträger 10 zum Horizontalträger 11 vorgesehen. Vertikalträger 10 und Horizontalträger 11 mit Gegengewichten 12 bilden somit eine Dreieckskonstruktion bzw. gegenseitige Verspannung. Durch diese Konstruktion, insbesondere die winklig zueinander angeordneten Bauteile und abrupten Richtungsänderungen der Dreieckskonstruktion sowie durch den oben beschriebenen Knick nach vorne, treten an den Kraftübergängen sehr hohe Biegebelastungen auf, die aufwändige, massive, schwere und große Tragwerksstrukturen notwendig machen. Diese wiederum führen zu einer höheren Anfälligkeit gegenüber Windbelastungen und Erdbeben.

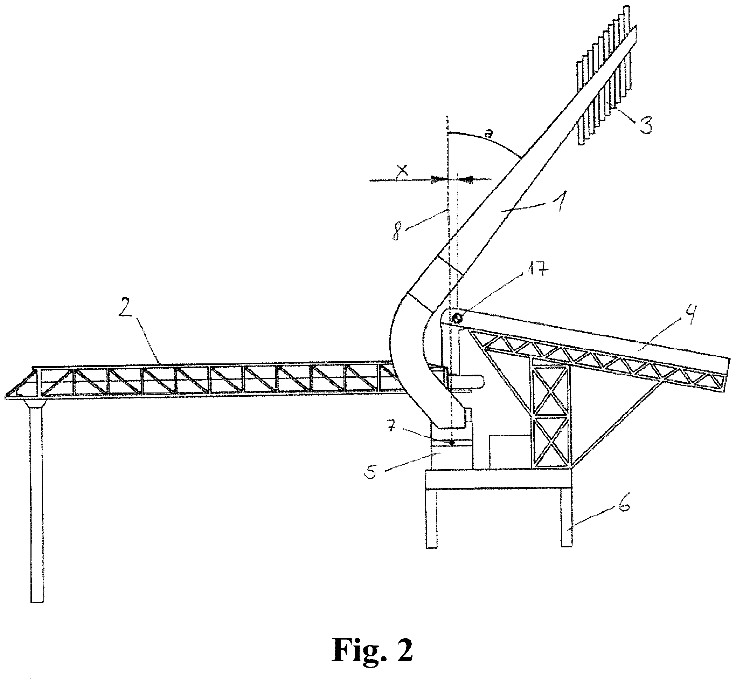

Figur 1B zeigt einen erfindungsgemäßen Pylon 1, der die Nachteile des Stands der Technik überwindet. Der Pylon 1 weicht durch eine Krümmung bzw. Biegung von der Vertikalachse 8 ab, die ausgehend von einem Basispunkt 7 (siehe Figur 2), oder versetzt hiervon, ausgebildet ist. Die Krümmung bzw. Biegung kann in Bezug auf die Vertikalachse konvex sein.

Der Basispunkt 7 kann insbesondere im Mittelpunkt einer Bodenplatte vom Podest 5 des Pylons 1 liegen. Dabei wird als Bodenplatte die Seite des Podests 5 verstanden, die im Betrieb an der vertikal unteren Seite, d.h. zum Boden hin gerichtet, auf dem Portal 6 angeordnet ist. Der Pylon 1 kann mittels des Podests 5, drehbar oder starr, auf dem Portal 6 angebracht sein. Im Falle einer drehbaren Ausführung ist es vorteilhaft, dass die Vertikalachse 8 (siehe Figur 2) durch den Basispunkt 7 verläuft und der Pylon somit um den Basispunkt 7 drehbar ist. Falls der Pylon 1 drehbar ausgeführt ist, kann das Podest 5 beispielsweise als Kugeldrehverbindung (KDV) ausgebildet sein. Der Pylon 1 ist über seine Längsausdehnung zumindest teilweise gebogen ausgebildet. Dabei kann der Pylon 1 zu mindestens 10%, 20 %, 25 % oder 50 % gebogen ausgebildet sein. Auch kann es zweckdienlich sein, den Pylon 1 vollständig gebogen auszuführen. Ferner ist der Pylon 1 vorzugsweise nur in eine Richtung gekrümmt, das heißt er weist keine Richtungsänderung auf. Insbesondere kann der Pylon 1 im Wesentlichen in Form einer Hyperbel ausgebildet sein. Ferner kann der Pylon 1 eine stetige Biegung ohne abrupte Richtungsänderung oder Kraftumlenkungen aufweisen.

Bevorzugt ist der Pylon 1 derart gekrümmt, dass sich sein Schwerpunkt 17 (ohne Berücksichtigung der Gegengewichte) im Wesentlichen über dem Basispunkt 7 oder in einem horizontalen Abstand x von der Vertikalachse 8 befindet. Der Abstand x bezieht sich auf die vom Ausleger 2 entfernte Seite der Vertikalachse 8. Der Abstand x kann also größer oder gleich 0 sein. Die Beschreibung des Schwerpunkts 17 in Bezug auf den Basispunkt 7 bezieht sich auf die Ausrichtung des Pylons 1 im Betrieb. Der Pylon 1 ist dann über die Bodenplatte des Podests 5 drehbar oder starr mit dem Portal 6 verbunden. Erfindungsgemäß befindet sich mindestens ein Gegengewicht 3 am oberen Ende des Pylons 1 und der Basispunkt 7 am vertikal unteren Ende des Pylons 1, also dem Boden zugewandt.

Wie oben mit Bezug auf den Stand der Technik beschrieben, kompensieren die Gegengewichte 3 alle oberhalb des Basispunkts 7 vorgesehenen Elemente, d.h. den Ausleger 2 sowie das zu verladende Schüttgut bzw. die Lasten. Durch die erfindungsgemäße Konstruktion und die Verlagerung des Schwerpunkts des Pylons 1 durch die beschriebene Krümmung kann somit die Anzahl der benötigten Gegengewichte 3 reduziert werden.

Weiterhin kann der Pylon 1 gabelförmig ausgebildet sein. Beispielsweise können zwei Beine 15 des Pylons 1 in einen verbindenden Steg 18 übergehen und somit eine Gabel 16 bilden und auf dem drehbaren oder starren Podest 5 angebracht sein. Dabei kann ein Ausleger 2 zum Verladen von Lasten wie beispielsweise Schüttgut zwischen der Gabel 16 angeordnet sein. Durch die Krümmung des Pylons 1 kann in dem gebogenen Teil ein Transportband oder eine andere Produktzufuhr 4 zur Zufuhr von Lasten oder Schüttgut oberhalb des Basispunkts 7 positioniert werden. Die Gabel 16 bzw. die zwei Beine 15 kann/können wie in Fig. 1B dargestellt in ein zentrales Mittelstück 14 münden.

Am oberen Ende des Pylons 1 wird mindestens ein Gegengewicht 3 angebracht, um das Gewicht des Auslegers 2 sowie der Lasten zu kompensieren. Der Ausleger 2 kann ferner in der Höhe verstellbar sein. Dies kann beispielsweise mittels Seilwinden bewerkstelligt werden, die am Pylon angebracht werden können.

Ferner kann der erfindungsgemäße Pylon 1 in einer Kastenbauweise ausgeführt sein. Kastenbauweise bedeutet, dass Bleche miteinander verschweißt werden, so dass eine Hohlstruktur entsteht, wodurch eine hohe Biegefestigkeit bei geringem Gewicht erreicht werden kann. Dadurch wird eine sehr gute Steifigkeit bei gleichzeitig weniger Materialverbrauch und Verringerung der Windangriffsfläche im Vergleich zu herkömmlichen Systemen erreicht. Durch die stetige Form ohne abrupte Kraftumlenkungen können die Biegebelastungen reduziert werden. Mit anderen Worten treten durch die gebogene Ausführung und den Wegfall des Horizontalträgers an Kraftübergängen hauptsächlich Normal- und Schubspannungen und nahezu keine Biegung auf. Dies verringert die Krafteinwirkungen insgesamt und führt so zu einem stabileren System, welches auch größere Erdbebenlasten aufnehmen kann. Ferner ist der Pylon 1 in der Größe skalierbar, so dass je nach Anwendungsgebiet, Standort und weiteren Parametern, wie beispielsweise der Schiffsgröße, der gleiche konstruktive Aufbau verwendet werden kann.

Der Pylon 1 kann für eine stationäre Beladevorrichtung oder eine andere Vorrichtung zum Verladen von Lasten, die beispielsweise in einem Hafen fest installiert ist, verwendet werden. Dabei kann die Vorrichtung um den Basispunkt 7 drehbar sein. Falls der Pylon 1 für einen mobilen Schiffsbelader verwendet wird, kann die Vorrichtung auf einem fahrbaren Portal angebracht sein. Dieses kann beispielsweise auf Schienen oder Reifen bewegt werden. Auf dem Portal ist ein Podest zur drehbaren Lagerung des Pylons 1 angebracht.

Somit ist insgesamt die Statik durch die Verlagerung des Schwerpunkts 17 in Richtung des Basispunkts 7 bzw. der Vertikalachse 8 verbessert. Durch das Kastenprofil wird eine sehr gute Steifigkeit erreicht und das Stahlbaugewicht kann verringert werden. Weiterhin weist der Pylon 1 durch die Krümmung keine abrupten Übergänge auf und hat eine stetige Neigung, was zu einer besseren Aufnahme der Lasten aufgrund der Kraftverläufe und Spannungssituation führt. Weiterhin werden die Belastungen bzw. Kräfte auf das Portal verringert, wodurch bei beweglichen Beladern die Größe des Fahrwerks reduziert werden kann. Da der Schwerpunkt 17 des Pylons 1 auf oder nahe der Drehachse bzw. Vertikalachse 8 liegt, werden keine zusätzlichen Gegengewichte 3 benötigt, um die Masse des Pylons 1 auszugleichen. Erfindungsgemäß wird mindestens ein Gegengewicht 3 zur Kompensation des Auslegers 2 direkt am Pylon 1 selbst aufgenommen.

Insgesamt kann somit auch die Masse der Gegengewichte 3 reduziert werden, da der Pylon 1 in sich stabil ist oder, falls der Schwerpunkt des Pylons hinter dem Basispunkt 7 liegt, ein dem Gegengewicht 3 gleichsinniges Drehmoment um den Basispunkt 7 erzeugt. Ferner kann der Pylon 1 auch die Abspannung des Auslegers 2, beispielsweise mit einem Windensystem, sowie die Bedienerkabine aufnehmen.

Die vorliegende Erfindung wird anhand des Beispiels eines mobilen oder stationären Schiffsbeladers für Schüttgut näher erläutert. Der Pylon kann allerdings auch für andere Beladevorrichtungen oder Vorrichtungen zum Verladen von Lasten verwendet werden.

Figur 2 zeigt eine Seitenansicht eines Schiffsbeladers mit dem erfindungsgemäßen Pylon 1. Der Pylon 1 ist hier um die Vertikalachse 8 drehbar auf einem Podest 5 gelagert. Insbesondere verläuft hier die Drehachse bzw. Vertikalachse 8 durch den Basispunkt 7. Das Schüttgut wird über die Produktzufuhr 4, insbesondere in Form von Förderbändern, zu einer Position befördert, die sich etwa über der Vertikalachse 8 befindet, und dort auf den Ausleger 2 übergeben. Wie oben beschrieben ermöglicht die Konstruktion des Pylons 1 eine Drehbewegung des Pylons 1 mit Ausleger 2 ohne die Gefahr einer Kollision mit dem Transportband 4. Um das Gewicht des Auslegers 2 zu kompensieren, sind am vertikalen Ende des Pylons 1 Gegengewichte 3 angebracht. Am vorderen Ende des Auslegers 2, d.h. in Entladerichtung des Produkts, ist ferner eine schwenkbare Vorrichtung vorgesehen, um den gesamten Schiffsrumpf beladen zu können. Diese kann beispielsweise als Kick-in Kick-out System ausgeführt sein. Die Beladevorrichtung ist mittels eines Portals 6 auf Schienen oder Reifen verfahrbar.

Dabei beginnt die Krümmung am unteren Ende des Pylons 1 und nebengeordnet zum Portal 6 ausgehend vom Basispunkt 7. Während herkömmliche Systeme einen Knick sowie nach dem Knick einen streng vertikalen Abschnitt aufweisen (siehe Figur 1A), ist im erfindungsgemäßen Pylon 1 eine kontinuierliche Krümmung ausgebildet, so dass der Pylon 1 nach hinten, d.h. entgegengesetzt zum Schiff bzw. Ausleger 2, gekrümmt ist und so die Vertikalachse 8 schneidet. Mit anderen Worten ist der Winkel a zwischen der Richtung, in der sich der Pylon am Schnittpunkt erstreckt, und der Vertikalachse 8 größer 0°. Der Winkel a wird dabei zwischen der Vertikalachse 8 und dem zentralen Mittelstück 14 des Pylons 1 eingeschlossen. Dieser Winkel a beträgt bevorzugt zwischen 20° und 60°, weiter bevorzugt zwischen 30° und 50° und besonders bevorzugt beträgt der Winkel a 40° bis 45°. Es kann auch vorteilhaft sein, dass der Pylon 1 in dem Bereich, in dem er die Vertikalachse 8 schneidet, noch gebogen ausgeführt ist. In diesem Fall wird der Winkel a zwischen Pylon 1 und Vertikalachse 8 mittels einer Tangente an dem Pylon definiert.

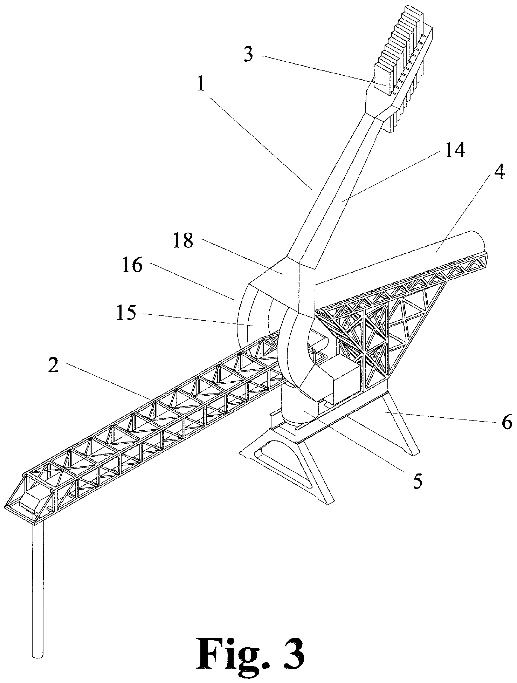

Figur 3 zeigt eine perspektivische Ansicht der in Fig. 2 gezeigten Beladevorrichtung bzw. Vorrichtung zum Verladen von Schüttgut mit dem erfindungsgemäßen Pylon 1. Der Ausleger 2 ist innerhalb der gabelförmigen Struktur des Pylons 1 angeordnet. Der Ausleger 2 kann vertikal verstellbar oder verkippbar sein. Hierfür kann beispielsweise eine Seilwinde oder eine andere Hubvorrichtung vorgesehen sein (nicht gezeigt).

Die Erfindung umfasst ferner einen mobilen oder stationären Entlader mit dem erfindungsgemäßen Pylon 1 wie oben beschrieben.

Die Erfindung umfasst ferner einen Stacker oder eine Transshipment-Vorrichtung mit dem erfindungsgemäßen Pylon 1. Außerdem ist von der Offenbarung auch ein Kran mit dem oben beschriebenen Pylon 1 umfasst. Neben Schüttgut können auch andere Lasten mit einer beliebigen Vorrichtung zum Verladen von Lasten mit dem oben beschriebenen Pylon 1 verladen oder transportiert werden. Ferner können neben Schiffen auch Eisenbahnwaggons oder LKW beladen werden.

### Liste der Bezugszeichen

- 1: Pylon
- 2: Ausleger
- 3: Gegengewicht
- 4: Produktzufuhr
- 5: Podest
- 6: Portal
- 7: Basispunkt
- 8: Vertikalachse
- 10: Vertikalträger
- 11: Horizontalträger
- 12: Gegengewicht
- 13: Abspannung
- 14: Zentrales Mittelstück
- 15: Beine
- 16: Gabel
- 17: Schwerpunkt
- 18: verbindender Steg
- a: Neigungswinkel

## Patentansprüche

1. Beladevorrichtung, wobei die Beladevorrichtung aufweist:
ein Portal (6);
ein Podest (5), das auf dem Portal (6) angebracht ist;
einen Pylon (1), wobei der Pylon (1) an einem Basispunkt (7) auf dem Podest (5) angeordnet ist;
einen Ausleger (2), der sich ausgehend vom Pylon (1) erstreckt;
wobei der Pylon (1) mit dem Podest (5) drehbar verbindbar ist,
wobei das Podest (5) eine Vertikalachse (8) definiert, die sich in vertikaler Richtung erstreckt und durch den Basispunkt (7) verläuft;
**dadurch gekennzeichnet, dass** der Pylon (1) zumindest in einem an das Podest (5) angrenzenden Bereich gebogen ist und die Vertikalachse (8) in einem Winkel (a) schneidet, wobei direkt an dem Pylon (1) an dem vom Basispunkt (7) entfernten Abschnitt mindestens ein Gegengewicht (3) angebracht ist.

2. Beladevorrichtung nach Anspruch 1,
wobei der Pylon (1) eine Gabel (16), ein zentrales Mittelstück (14) und Gegengewichte (3) aufweist, wobei die Gabel (16) durch zwei Beine (15) und einen verbindenden Steg (18) gebildet wird und die Gabel (16) gebogen ist.

3. Beladevorrichtung nach Anspruch 2, wobei der Ausleger (2) zwischen den zwei Beinen (15) des Pylons (1) angeordnet ist.

4. Beladevorrichtung nach einem der vorstehenden Ansprüche, wobei der Ausleger (2) in der Höhe verstellbar ist.

5. Beladevorrichtung nach einem der vorstehenden Ansprüche,
wobei der Winkel (a) zwischen 20° und 60°, bevorzugt 30° und 50°, und besonders bevorzugt 40° bis 45° beträgt.

6. Beladevorrichtung nach einem der vorstehenden Ansprüche, wobei der Schwerpunkt des Pylons (1) im Wesentlichen über dem Basispunkt oder vom Basispunkt (7) in einer zum Ausleger (2) entgegengesetzten Richtung versetzt liegt.

7. Beladevorrichtung nach einem der vorstehenden Ansprüche, wobei der Pylon (1) in einer Richtung gebogen ist.

8. Beladevorrichtung nach einem der vorstehenden Ansprüche, wobei das Podest (5) um die Vertikalachse (8) drehbar ist.

9. Beladevorrichtung nach einem der vorstehenden Ansprüche, wobei der vom Basispunkt (7) entfernte Abschnitt des Pylons (1) gerade ausgebildet ist.

10. Beladevorrichtung nach einem der vorstehenden Ansprüche, wobei der Pylon (1) über seine Längsausdehnung zu mindestens 10%, 20 %, 25 % oder 50 % gebogen ausgebildet ist.

11. Beladevorrichtung nach einem der vorstehenden Ansprüche, wobei der Pylon (1) aus einer kastenförmigen Stahlkonstruktion ausgebildet ist.

12. Beladevorrichtung nach einem der vorstehenden Ansprüche, wobei Produktzufuhreinrichtungen (4), insbesondere Förderbänder, an der Beladevorrichtung vorgesehen sind.

13. Beladevorrichtung nach einem der vorstehenden Ansprüche, wobei die Beladevorrichtung ein mobiler oder stationärer Ent- oder Belader für Schiffe oder ein Kran ist.

14. Pylon (1) für eine Beladevorrichtung,
wobei der Pylon (1) von einem Basispunkt (7) ausgeht und zumindest teilweise gebogen ausgeführt ist, und
wobei der Pylon (1) derart gebogen ist, dass er eine Vertikalachse (8) unter einem Winkel (a) schneidet,
wobei sich die Vertikalachse (8) durch den Basispunkt (7) in vertikaler Richtung erstreckt und
wobei direkt an dem Pylon (1) an dem vom Basispunkt (7) entfernten Abschnitt mindestens ein Gegengewicht (3) angebracht ist.

## Claims

1. A loading device, wherein the loading device comprises:
a gantry (6);
a platform (5) which is mounted on the gantry (6);
a pylon (1), wherein the pylon (1) is arranged at a base point (7) on the platform (5);
a jib (2) which extends out from the pylon (1);
wherein the pylon (1) is rotatably connected to the platform (5),
wherein the platform (5) defines a vertical axis (8) which extends in a vertical direction and runs through the base point (7);
**characterized in that** the pylon (1) is curved at least in a region adjoining the platform (5) and intersects the vertical axis (8) at an angle (a), wherein at least one counterweight (3) is directly mounted on the pylon (1) on the section remote from the base point (7).

2. The loading device according to claim 1,
wherein the pylon (1) comprises a fork (16), a central middle piece (14) and counterweights (3), wherein the fork (16) is formed by two legs (15) and a connecting bar (18), and the fork (16) is curved.

3. The loading device according to claim 2, wherein the jib (2) is arranged between the two legs (15) of the pylon (1).

4. The loading device according to any one of the aforementioned claims, wherein the jib (2) is adjustable in height.

5. The loading device according to any one of the aforementioned claims,
wherein the angle (a) is between 20°and 60°, preferably 30° and 50°, and particularly preferably 40° to 45°.

6. The loading device according to any one of the aforementioned claims, wherein the center of gravity of the pylon (1) is substantially above the base point or offset from the base point (7) in a direction opposite the jib (2).

7. The loading device according to any one of the aforementioned claims, wherein the pylon (1) is curved in one direction.

8. The loading device according to any one of the aforementioned claims, wherein the platform (5) is rotatable about the vertical axis (8).

9. The loading device according to any one of the aforementioned claims, wherein the section of the pylon (1) remote from the base point (7) is straight.

10. The loading device according to any one of the aforementioned claims, wherein the pylon (1) is curved over at least 10%, 20%, 25% or 50% of its longitudinal extent.

11. The loading device according to any one of the aforementioned claims, wherein the pylon (1) is formed from a box-shaped steel construction.

12. The loading device according to any one of the aforementioned claims, wherein product supply devices (4), in particular conveyor belts, are provided on the loading device.

13. The loading device according to any one of the aforementioned claims, wherein the loading device is a mobile or stationary unloader or loader for ships or a crane.

14. A pylon (1) for a loading device,
wherein the pylon (1) extends out from a base point (7) and is at least partially curved, and
wherein the pylon (1) is curved in such a way that it intersects a vertical axis (8) at an angle (a),
wherein the vertical axis (8) extends through the base point (7) in a vertical direction, and
wherein at least one counterweight (3) is directly mounted on the pylon (1) on the section remote from the base point (7).

## Revendications

1. Dispositif de chargement, ledit dispositif de chargement comprenant :
un portique (6) ;
un socle (5) monté sur le portique (6) ;
un mât (1), ledit mât (1) étant disposé contre un point de base (7) sur le socle (5) ;
une flèche (2) s'étendant à partir du mât (1) ;
le mât (1) pouvant être raccordé de manière rotative au socle (5),
le socle (5) définissant un axe vertical (8) s'étendant dans la direction verticale et passant par le point de base (7) ;
**caractérisé en ce que** le mât (1) est cintré au moins dans une zone adjacente au socle (5) et croise l'axe vertical (8) selon un angle (a), au moins un contrepoids (3) étant monté directement sur le mât (1) au niveau de la partie distante du point de base (7).

2. Dispositif de chargement selon la revendication 1,
où le mât (1) présente une fourche (16), une pièce centrale (14) et des contrepoids (3), la fourche (16) étant constituée de deux jambes (15) et d'une entretoise de liaison (18), et la fourche (16) étant cintrée.

3. Dispositif de chargement selon la revendication 2, où la flèche (2) est présentée entre les deux jambes (15) du mât (1).

4. Dispositif de chargement selon l'une des revendications précédentes, où la flèche (2) est réglable en hauteur.

5. Dispositif de chargement selon l'une des revendications précédentes,
où l'angle (a) est compris entre 20° et 60°, avantageusement entre 30° et 50°, et de préférence entre 40° et 45°.

6. Dispositif de chargement selon l'une des revendications précédentes, où le centre de gravité du mât (1) est situé sensiblement au-dessus du point de base ou décalé par rapport au point de base (7) dans une direction opposée à la flèche (2).

7. Dispositif de chargement selon l'une des revendications précédentes, où le mât (1) est cintré dans une direction.

8. Dispositif de chargement selon l'une des revendications précédentes, où le socle (5) est rotatif autour de l'axe vertical (8).

9. Dispositif de chargement selon l'une des revendications précédentes, où la partie du mât (1) distante du point de base (7) est rectiligne.

10. Dispositif de chargement selon l'une des revendications précédentes, où le mât (1) est cintré sur au moins 10 %, 20 %, 25 % ou 50 % de son extension longitudinale.

11. Dispositif de chargement selon l'une des revendications précédentes, où le mât (1) est formé d'une structure en acier en forme de caisson.

12. Dispositif de chargement selon l'une des revendications précédentes, où des dispositifs d'alimentation en produits (4), en particulier des convoyeurs, sont prévus sur le dispositif de chargement.

13. Dispositif de chargement selon l'une des revendications précédentes, où le dispositif de chargement est un dispositif de déchargement ou de chargement mobile ou stationnaire pour navires, ou une grue.

14. Mât (1) pour un dispositif de chargement,
où le mât (1) part d'un point de base (7) et est au moins partiellement cintré, et
où le mât (1) est cintré de manière à croiser un axe vertical (8) selon un angle (a),
où l'axe vertical (8) s'étend dans la direction verticale en passant par le point de base (7), et
où au moins un contrepoids (3) est monté directement sur le mât (1) au niveau de la partie distante du point de base (7).
